# EUROPÄISCHE PATENTANMELDUNG

(11) **EP 1 624 714 A2**
(43) Veröffentlichungstag der Anmeldung: **08.02.2006**
(21) Anmeldenummer: 05011810.8
(22) Anmeldetag: 01.06.2005
(51) Int. Cl.: H04Q 7/38

(54) **Verfahren zum Bereitstellen von Diensten verschiedener Diensteanbieter und zentrale, rechnerbasierte Plattform zur Durchführung eines solchen Verfahrens**

(30) Priorität: 06.08.2004 DE 102004038588
(71) Anmelder: Deutsche Telekom AG, 53113 Bonn (DE)
(72) Erfinder: Leiber, Thomas, 64287 Darmstadt (DE); Böhm, Andreas, Dr., 64342 Seeheim-Jugenheim (DE); Karge, Ralf, Dipl.-Ing., 67065 Ludwigshafen (DE)

(57) **Zusammenfassung**

Die Erfindung betrifft ein Verfahren zum Bereitstellen von Diensten verschiedener Diensteanbieter einem oder mehreren Teilnehmern, die verschiedenen Kommunikationssystemen zugeordnet sein können sowie eine zentrale, rechnerbasierte Plattform, die insbesondere zur Durchführung des Verfahrens ausgebildet ist.

Der vorliegenden Erfindung liegt das technische Problem zugrunde, ein Verfahren und eine Plattform zur Verfügung zu stellen, mit denen die Bereitstellung von lokationsbasierten Diensten verschiedener Diensteanbieter an Teilnehmer verschiedener Kommunikationssysteme einfach und flexible gesteuert werden kann.

Dazu werden mehrere Teilnehmer, die verschiedenen Kommunikationssystemen (30, 32, 34, 36) angehören können, an einer zentralen Einrichtung (10) angemeldet.
Zudem werden verschiedene Diensteanbieter der zentralen Einrichtung (10) zugeordnet. Anschließend werden Berechtigungsdaten wenigstens eines Teilnehmers in der zentralen Einrichtung gespeichert, die den oder die Diensteanbieter berechtigen, einen oder mehrere Dienste dem wenigstens einen Teilnehmer bereitzustellen. Lokalisierungsdaten der angemeldeten Teilnehmer werden zur zentralen Einrichtung (10) übertragen und dort gespeichert werden, wobei in Abhängigkeit von den teilnehmerbasierten Lokalisierungsdaten die berechtigten Diensteanbieter Dienste den jeweiligen Teilnehmern (160) bereitstellen.

## Beschreibung

Die Erfindung betrifft ein Verfahren zum Bereitstellen von Diensten verschiedener Diensteanbieter einem oder mehreren Teilnehmern, die verschiedenen Kommunikationssystemen zugeordnet sein können sowie eine zentrale, rechnerbasierte Plattform, die insbesondere zur Durchführung des Verfahrens ausgebildet ist.

Vor allem im Mobilfunkbereich werden sogenannte lokationsbasierte Dienste (location based services, LBS) in Zukunft ein weites Anwendungsfeld finden. Lokationsbasierte Dienste nutzen die Möglichkeit, ein eingeschaltetes Endgerät jederzeit orten zu können und basierend auf den ermittelten Aufenthaltsort des jeweiligen Endgerätes maßgeschneiderte Dienstleitungen und/oder Informationen aus dieser Umgebung anzubieten.

Bisher müssen sich Mobilfunk-Teilnehmer, die in Abhängigkeit ihres Aufenthaltsortes Dienste und Informationen wünschen, bei den jeweiligen Diensteanbieter anmelden, wobei jeder Diensteanbieter die angemeldeten Teilnehmer selbst verwalten muss. Das bedeutet, dass die Lokalisierungsdaten jedes an einem Diensteanbieter angemeldeten Teilnehmers zu diesem übertragen werden müssen, und dass jeder Diensteanbieter selbst ermitteln muss, ob und wann er welche Dienste einem Teilnehmer zur Verfügung stellen darf. Der hardware- und softwarebedingte Aufwand seitens der Diensteanbieter nimmt weiter zu, wenn Teilnehmer verschiedener Kommunikationssysteme bedient werden sollen, da die Kommunikationssysteme in der Regel über herstellerspezifische Schnittstellen verfügen, die allesamt im Server eines Diensteanbieters implementiert sein müssen. Bei den verschiedenen Kommunikationssystemen kann es sich um GSM (global system for mobile communications), GPS (global positioning system), Assisted GPS, UMTS (universal mobile telecommunication system), WLAN (wireless local area network), DVB-x (digital video broadcast) oder RFID (radio frequency identification) gestützte Kommunikationssysteme handeln.

Demzufolge liegt der vorliegenden Erfindung das technische Problem zugrunde, ein Verfahren und eine Plattform zur Verfügung zu stellen, mit denen die Bereitstellung von lokationsbasierten Diensten verschiedener Diensteanbieter an Teilnehmer verschiedener Kommunikationssysteme einfach und flexible gesteuert werden kann.

Ein wesentlicher Aspekt der Erfindung ist darin zu sehen, eine Plattform als zentrale Schnittstelle für die Sammlung und Verwaltung von Lokalisierungsdaten angemeldeter Teilnehmer sowie der Übermittlung der Lokalisierungsdaten an, an der Plattform angemeldete Diensteanbietern zu schaffen. Die Lokalisierungsdaten können dann unter Berücksichtigung persönlicher Präferenzen und Wünsche der jeweiligen Teilnehmer ausgewählten, angemeldeten Diensteanbieter zur Nutzung bereitgestellt werden.

Das oben genannte technische Problem löst die Erfindung zum einen durch die Verfahrensschritte des Anspruchs 1.

Danach wird ein Verfahren zum Bereitstellen von Diensten verschiedener Diensteanbieter wenigstens einem Teilnehmer zur Verfügung gestellt. Die Teilnehmer können verschiedenen Kommunikationssystemen zugeordnet sein, wobei das Bereitstellen von Diensten in Abhängigkeit des Aufenthaltsortes des oder der Teilnehmer erfolgt. An dieser Stelle sei darauf hingewiesen, dass es sich bei den Kommunikationssystemen um drahtgebundene und/oder nicht drahtgebundene Kommunikationssysteme handeln kann. Drahtlose Kommunikationssysteme sind beispielsweise Mobilfunknetze, GPS-Satellitenübertragungssysteme, Rundfunksysteme zur Übertragung digitaler Audio- oder Videodaten und dergleichen.

Um das Bereitstellen von Diensten verschiedener Diensteanbieter wenigstens einem Teilnehmer zentral steuern zu können, werden mehrere Teilnehmer an einer zentralen Einrichtung angemeldet. Zusätzlich werden verschiedene Diensteanbieter, die ihre Dienste den Teilnehmern anbieten möchten, der zentralen Einrichtung zugeordnet. Darüber hinaus werden Berechtigungsdaten wenigstens eines Teilnehmers in der zentralen Einrichtung gespeichert. Bei den Berechtigungsdaten handelt es sich um Informationen, die den oder mehrere Diensteanbieter berechtigen, einen oder mehrere Dienste dem wenigstens einen Teilnehmer bereitzustellen. Ferner werden Lokalisierungsdaten der angemeldeten Teilnehmer zur zentralen Einrichtung übertragen und dort gespeichert, wobei in Abhängigkeit von den teilnehmerbasierten Lokalisierungsdaten die berechtigten Diensteanbieter Dienste den jeweiligen Teilnehmern bereitstellen.

Vorteilhafte Weiterbildungen sind Gegenstand der Unteransprüche.

Zweckmäßigerweise werden die teilnehmerbasierten Lokalisierungsdaten vom jeweiligen Teilnehmer, der zum Beispiel über einen eigenen GPS-Empfänger/Sender verfügt, oder vom jeweiligen Kommunikationssystem selbst zur zentralen Einrichtung übertragen. Hierzu dienen beispielsweise die Basisstationen eines Mobilfunknetzes, welche die Lokalisierungsdaten ihrer Teilnehmer aufzeichnen.

An dieser Stelle sei darauf hingewiesen, dass die Server der verschiedenen Diensteanbieter zweckmäßigerweise über standardisierte Schnittstellen, zum Beispiel Web-Schnittstellen mit der zentralen Einrichtung verbunden sind, wohingegen die Kommunikationssysteme über proprietäre Schnittstellen mit der zentralen Einrichtung verbunden sind.

Möchte ein Diensteanbieter seine Dienste einem angemeldeten Teilnehmer anbieten, so kann er zunächst die entsprechenden teilnehmerbasierten Lokalisierungsdaten von der zentralen Einrichtung anfordern. Hierzu wird ein Identifikationsparameter des angemeldeten Teilnehmers verwendet, der in der zentralen Einrichtung und beim Diensteanbieter gespeichert ist. Dieser Identifikationsparameter kann ein Benutzername, ein Pseudonym, eine Telefonnummer eines Festnetzes, eine mobile Rufnummer (mobile station international subscriber directory number, MSISDN) eine Mediumzugangssteueradresse (MAC, medium access control) oder ein anderer geeigneter Identifikationsparameter sein. Die zentrale Einrichtung überträgt nur dann die angeforderten teilnehmerbasierten Lokalisierungsdaten an den Diensteanbieter, wenn die zuvor gespeicherten Berechtigungsdaten des angemeldeten Teilnehmers signalisieren, dass der Diensteanbieter von dem Teilnehmer berechtigt worden ist, diesem Teilnehmer Dienste anzubieten.

Alternativ oder ergänzend informiert die zentrale Einrichtung in Abhängigkeit von den teilnehmerbezogenen Berechtigungsdaten, den teilnehmerbasierten Lokalisierungsdaten und vorbestimmten Regeln einen oder mehrere der berechtigten Diensteanbieter über den Aufenthaltsort wenigstens eines Teilnehmers. Bei diesen Regeln handelt es sich um sogenannte Benachrichtigungsregeln, die beispielsweise die Positionsänderung eines Teilnehmers, oder die Information betreffen, dass sich ein Teilnehmer aus oder in einen definierten geografischen Bereich bewegt hat.

Vorzugsweise enthalten die teilnehmerbezogenen Berechtigungsdaten zeitbasierte Informationen. Das bedeutet, dass ein Teilnehmer Zeitpunkte oder Zeitspannen festlegen kann, zu denen ein bestimmter Diensteanbieter berechtigt wird, diesem Teilnehmer lokationsbasierte Dienste anzubieten.

Zweckmäßigerweise werden beim Anmelden der Teilnehmer an der zentralen Einrichtung teilnehmerbezogene Identifikationsparameter gespeichert, die beispielsweise von einem Diensteanbieter benutzt werden, um teilnehmerbasierte Lokalisierungsdaten an der zentralen Einrichtung anzufordern.

Die Lokalisierungsdaten der angemeldeten Teilnehmer werden regelmäßig oder zu vorbestimmbaren Zeitpunkten aktualisiert.

Definieren die Lokalisierungsdaten den Aufenthaltsort mobiler Teilnehmer, können vorteilhafterweise zu jedem angemeldeten mobilen Teilnehmer individuelle Bewegungsprofile berechnet werden. Die Bewegungsprofile können beispielsweise folgende Bewegungszustände definieren:
Der Benutzer bewegt sich schnell.
Der Benutzer bewegt sich langsam.
Der Benutzer bewegt sich momentan nicht.
Der Benutzer hat sich seit n Stunden nicht mehr bewegt.

Vorteilhafterweise kann aus den individuellen Bewegungsprofilen der zukünftige Aufenthaltsort der jeweiligen mobilen Teilnehmer berechnet werden. Neben der Berechnung des zukünftigen Aufenthaltsort kann auch der Zeitpunkt ermittelt werden, zu dem ein Teilnehmer diesen Aufenthaltsort erreichen wird. Auf diese ist es möglich, einem Diensteanbieter den Zeitpunkt eines Teilnehmers mitzuteilen, zu dem er in dessen Versorgungsbereich eintritt. Der Diensteanbieter ist dann nicht mehr darauf angewiesen, dass er regelmäßig Lokalisierungsdaten der angemeldeten Teilnehmer von der zentrale Einrichtung anfordern, oder über entsprechende Positionsänderungen von der zentralen Einrichtung informiert werden muss. Vielmehr genügt es, dass der Diensteanbieter die aktuelle Zeit überwacht und automatisch einen lokationsbasierten Dienst einem Teilnehmer bereitstellt, sobald der zuvor berechnete Zeitpunkt des Eintritts des Teilnehmers in den Versorgungsbereich des Diensteanbieters erreicht worden ist.

Ein entsprechendes Verfahren, das anhand gesammelter und gespeicherter Informationen aus der Vergangenheit statistische Berechnungen vornimmt, um frühzeitig zu erkennen, welche Strecke ein mobiler Teilnehmer wählen wird, ist aus der deutschen Patentanmeldung Nr. 103 21 561 A1 bekannt, die als älteres Recht gemäß §3 Abs. 2 Nr. 1. PatG gilt.

Das oben genannte technische Problem wird zum anderen durch eine zentrale, rechnerbasierte Plattform, die insbesondere zur Durchführung des geschilderten Verfahrens ausgebildet ist, gelöst.

Die zentrale, rechnerbasierte Plattform weist erste Schnittstellen zur Kommunikation mit Servern verschiedener Diensteanbieter, zweite Schnittstellen zur Kommunikation mit Kommunikationssystemen und/oder mit den Kommunikationssystemen zugeordneten Teilnehmern auf. Ferner sind eine erste Speichereinrichtung zum Speichern von Identifikationsparametern angemeldeter Teilnehmer, eine zweite Speichereinrichtung zum Speichern von Berechtigungsdaten wenigstens eines angemeldeten Teilnehmers, die den oder die Diensteanbieter berechtigen, einen oder mehrere Dienste dem wenigstens einen Teilnehmer bereitzustellen, sowie eine dritte Speichereinrichtung zum Speichern von Lokalisierungsdaten angemeldeter Teilnehmer vorgesehen. Ferner ist eine Einrichtung zum Steuern der Übertragung von Lokalisierungsdaten zu wenigstens einem Server in Abhängigkeit von den gespeicherten Identifikationsparametern und Berechtigungsdaten vorgesehen.

Vorteilhafte Weiterbildungen sind Gegenstand der Unteransprüche.

Vorteilhafterweise ist eine extern ansteuerbare Einrichtung zum Definieren geographischer Zonen, zum Zuordnen der geographischen Zonen einem oder mehreren Servern und zum Definieren von Regeln bezüglich der geographischen Zonen vorgesehen. In Abhängigkeit der empfangenen und verwalteten Lokalisierungsdaten angemeldeter Teilnehmer kann die zentrale, rechnerbasierte Plattform feststellen, wann ein Teilnehmer in eine bestimmte geographische Zone, die dem Versorgungsbereich eines bestimmten Diensteanbieters entspricht, eintritt und eine entsprechende Benachrichtigung an den Diensteanbieter absenden.

Hierfür ist eine Einrichtung zum Erzeugen einer Benachrichtigung für einen oder mehrere Server in Abhängigkeit von den Berechtigungsdaten, den teilnehmerbasierten Lokalisierungsdaten und den Regeln vorgesehen.

Vorzugsweise handelt es sich bei den ersten Schnittstellen um standardisierte Schnittstellen, insbesondere Web-Schnittstellen, und bei den zweiten Schnittstellen um herstellerspezifische Schnittstellen.

Zweckmäßigerweise ist eine Einrichtung zum Aktualisieren der Lokalisierungsdaten angemeldeter Teilnehmer vorgesehen.

Die Aktualisierung der Lokalisierungsdaten ist erforderlich, wenn Bewegungsprofile für mobile Teilnehmer ermittelt werden sollen. Hierzu dient eine Recheneinrichtung, die aus gespeicherten Lokalisierungsdaten mobiler Teilnehmer individuelle Bewegungsprofile berechnet, wobei die Bewegungsprofile in einer vierten Speichereinrichtung gespeichert werden können.

Mittels einer Prädiktionseinrichtung können' aus den individuellen Bewegungsprofilen die zukünftigen Aufenthaltsorte der jeweiligen mobilen Teilnehmer berechnet werden.

Zur Erfassung von Kommunikationsdatensätzen ist eine Abrechnungseinrichtung vorgesehen, die die gesammelten Abrechnungsdaten beispielsweise über das Internet an eine Abrechnungszentrale weiterleiten kann.

Erwähnt sei, dass die Dienste und/oder Informationen der Diensteanbieter den Teilnehmern über das Kommunikationssystem, an dem die jeweiligen Teilnehmer angemeldet sind, bereitgestellt werden. Hierbei kann die zentrale, rechnerbasierte Plattform als Steuer- und/oder Vermittlungsknoten zwischen den Servern der Diensteanbieter und der Kommunikationssystems dienen, muss sie aber nicht.

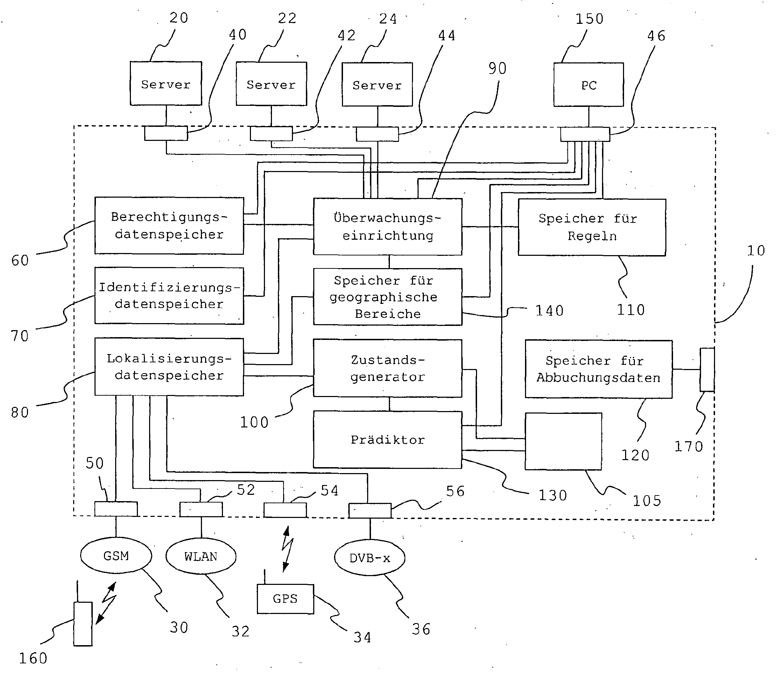

Die Erfindung wird nachfolgend anhand eines Ausführungsbeispiels in Verbindung mit einer einzigen Figur näher erläutert.

Die Figur zeigt eine mit 10 bezeichnete zentrale, rechnerbasierte Plattform, die auch als Permission und Privacy Gateway (PPGW) bezeichnet werden kann. Die Plattform 10 kann aus einem einzigen Computer oder einem Computer- und Speichernetz bestehen. An die zentrale, rechnerbasierte Plattform 10 sind Server 20, 22 und 24 verschiedener Diensteanbieter über Schnittstellen 40, 42 bzw. 44 angeschlossen. Die Schnittstellen 40, 42 und 44 sind standardisierte Schnittstellen, so dass jederzeit Server anderer Diensteanbieter zugeschaltet oder gegen Server anderer Diensteanbieter ausgetauscht werden können. Über Schnittstellen 50, 52, 54 und 56 sind verschiedene Kommunikationssysteme 30, 32, 34 bzw. 36 mit der zentralen, rechnerbasierten Plattform 10 verbunden. Beispielsweise ist ein GSM- und/oder UMTS-Mobilfunknetz 30 über eine Basisstation mit der Schnittstelle 50 verbunden. Ein drahtloses lokales Netz 32 kann über die Schnittstelle 52 mit der zentralen, rechnerbasierten Plattform 10 kommunizieren. Über die Schnittstelle 54 kann eine mobile Endeinrichtung 34, die über einen eigenen GPS-Sender/Empfänger verfügt, Daten mit der Plattform 10 austauschen. An die Schnittstelle 56 kann ein drahtgebundenes oder drahtloses digitales Video-Broadcasting-Netz oder ein sogenanntens RFID (Radio Frequency Identification)-Netz angeschlossen werden. In einem Berechtigungsdaten-Speicher 60 werden die Berechtigungsdaten, auch Einverständniserklärungen genannt, angemeldeter Teilnehmer abgelegt, die definieren, welchem Diensteanbieter ein Teilnehmer das Recht erteilt hat, ihn zu lokalisieren. Die Erlaubnis, Teilnehmer zu lokalisieren, kann auch durch individuelle Zeitprofile für unterschiedliche Dienste und/oder unterschiedlicher Diensteanbieter eingeschränkt werden. Die entsprechenden Zeitprofile können beispielsweise in einem Regelspeicher 110 abgelegt werden.

Ferner ist ein Identifizierungsdaten--Speicher 70 vorgesehen, in dem Identifikationsparameter der angemeldeten Teilnehmer abgelegt sind. Identifikationsparameter können sein: Benutzername, Pseudonyme, Telefonnummern des Festnetzes, Rufnummern eines Mobilfunknetzes, eine Mediumzugangssteueradresse von Netzwerkkarten und dergleichen. In einem Lokalisierungdaten-Speicher 80 werden die Lokalisierungsdaten aller angemeldeter Teilnehmer gespeichert. Vorteilhafterweise werden die während einer Sitzung aktualisierten Lokalisierungsdaten eines oder mehrerer Teilnehmer protokolliert, um, wie später noch näher ausgeführt wird, entsprechende Bewegungsprofile für die jeweiligen angemeldeten Teilnehmer berechnen zu können.

Die teilnehmerbezogenen Lokalisierungsdaten werden von den Kommunikationsnetzen, wie zum Beispiel den Netzen 30, 32 und 36, an denen die jeweiligen Teilnehmer angemeldet sind, über die entsprechenden Schnittstellen 50, 52 bzw. 56 zum Lokalisierungsdaten-Speicher 80 übertragen. Mit GPS-Sender/Empfänger ausgestattete Endeinrichtungen, wie beispielsweise das Endgerät 34, erzeugen ihre Lokalisierungsdaten selbst und übertragen diese beispielsweise über die Funk-Schnittstelle 54 zum Lokalisierungsdaten-Speicher 80.

Ferner ist ein Zustandsgenerator 100 mit dem Lokalisierungsdaten-Speicher 80 verbunden. Der Zustandsgenerator 100 erzeugt aus den' gespeicherten teilnehmerbasierten Lokalisierungsdaten Bewegungszustände und/oder Bewegungsprofile für jeden angemeldeten mobilen Teilnehmer. Die Bewegungszustände können beispielsweise sein:
Der Benutzer bewegt sich schnell.
Der Benutzer bewegt sich langsam.
Der Benutzer bewegt sich momentan nicht.
Der Benutzer hat sich seit n Stunden nicht mehr bewegt.

Die vom Zustandsgenerator 100 berechneten Bewegungsprofile werden einem Prädiktor 130 zur Verfügung gestellt.
Der Prädiktor 130 ermittelt anhand der ihm vom Zustandsgenerator 100 zur Verfügung gestellten Bewegungsprofile eine Voraussage über einen zukünftigen Aufenthaltstort der jeweiligen Teilnehmer.

Über einen an die zentrale, rechnerbasierte Plattform 10 angeschalteten Personalcomputer 150 können beispielsweise geographische Zonen definiert werden, die dem Versorgungsbereich eines oder mehrerer Diensteanbieter entsprechen. Die geographischen Zonendaten werden in einem Speicher 140 abgelegt. Der Speicher 140 ist mit dem Lokalisierungsdaten-Speicher 80, dem Speicher 110 und einer Überwachungseinrichtung 90 verbunden. In dem bereits zuvor erwähnten Regelspeicher 110 können beispielsweise Regeln abgelegt werden, die festlegen, wann die Überwachungseinrichtung 90 eine entsprechende Benachrichtigungsnachricht an einen oder mehrere Server verschiedener Diensteanbieter überträgt. Die Regeln können festlegen, dass ein Server eines bestimmten Diensteanbieters über die Überwachungseinrichtung 90 eine Nachricht erhält, wenn ein angemeldeter Teilnehmer eine vorher definierte Zone betritt oder verlässt. Die Benachrichtigung teilt dem jeweiligen Server dann mit, dass der jeweilige Teilnehmer nunmehr im Versorgungsbereich des jeweiligen Diensteanbieters angekommen und damit einverstanden ist, dass der Diensteanbieter ihm lokationsbasierte Dienste und/oder Informationen bereitstellt.

Ferner ist eine Abrechnungs- oder Buchungseinrichtung 120 vorgesehen, die Kommunikationsdatensätze bzw. abrechnungsbezogene Daten für die jeweiligen angemeldeten Teilnehmer erzeugt und sammelt und beispielsweise über eine Schnittstelle 170 über das Internet zu einer zentralen Abrechnungszentrale (nicht dargestellt) übermittelt.

Über den extern anschaltbaren Personalcomputer 150 können Teilnehmer an der zentralen, rechnerbasierten Plattform 10 registriert werden, indem ihre jeweiligen Identifikationsparameter in den Speicher 70 und ihre entsprechenden Berechtigungsdaten in den Speicher 60 abgelegt werden. Berechtigungsdaten sowie Identifikationsparameter angemeldeter Teilnehmer können beispielsweise mittels des Personalcomputers 150 gelöscht oder geändert werden. Ebenfalls können die im Speicher 140 abgelegten geographischen Zonen über den externen Personalcomputer 150 definiert, geändert oder gelöscht werden. Das gleich gilt für die im Regelspeicher 110 abgelegten Regeln. An dieser Stelle sei darauf hingewiesen, dass anstelle des Personal Computer 150 auch jedes Endgerät, beispielsweise das Endgerät 34 zur Programmierung der Plattform 10 verwendet werden kann.

Mit Hilfe des extern anschaltbaren Personalcomputers 150 oder den an den jeweiligen Kommunikationsnetzen angemeldeten Endgeräten, beispielsweise ein Handy 160, können die Daten der angemeldeten Nutzer, sowie die Bewegungsprofile abgefragt werden. Ebenfalls ist es möglich, mit Hilfe des Prädiktors 130 unter Berücksichtigung statistischer Methoden den zukünftigen Aufenthaltsort sowie die Zeit des Eintritts in einen zukünftigen Aufenthaltsort eines bestimmten Teilnehmers zu berechnen und diese Daten beispielsweise wieder über den externen Personalcomputer 150 abzufragen. Hierzu kann der Prädiktor 130 über die Schnittstelle 46 mit dem Pc150 kommunizieren.

Die an die Schnittstellen 50, 52, 54 und 56 angeschlossenen Kommunikationsnetze 30, 32 und 36 sowie das Endgerät 34 können allgemein auch als sogenannte Lokalisierungsprovider bezeichnet werden. Unter Lokalisierungsprovider versteht man ganz allgemein Einrichtungen, die Lokalisierungsinformationen der an der zentralen, rechnerbasierten Plattform 10 angemeldeten Teilnehmer erzeugen und diese zum Lokationsdaten-Speicher 80 übertragen.

Nachfolgend wird die Funktionsweise der in der Figur dargestellten zentralen, rechnerbasierten Plattform 10 näher erläutert.

Angenommen sei nunmehr, dass sich beispielsweise der Benutzer des Handys 160, welcher am GSM-Mobilfunknetz 30 angemeldet ist, an der zentralen, rechnerbasierten Plattform 10 hinsichtlich der Server 20 und 22 registrieren lassen möchte.

Die Anmeldung kann über das mobile Endgerät 160 oder über den Personalcomputer 150 erfolgen. Für den vorliegenden Fall sei angenommen, dass die Anmeldung des Teilnehmers 160 über den Personalcomputer 150 erfolgen soll, der demzufolge nicht nur mit der zentralen, rechnerbasierten Plattform 10, sondern auch mit den Servern 20 und 22, beispielsweise über' das Internet verbunden sein kann.

Zunächst werden Identifikationsparameter des neuen Teilnehmers 160 am Personalcomputer 150 eingegeben und zum Speicher 70 der zentralen, rechnerbasierten Plattform 10 übertragen, sofern der Teilnehmer 160 noch nicht an der zentralen, rechnerbasierten Plattform 10 registriert ist. Anschließend wird der zentralen, rechnerbasierten Plattform 10 über den Personalcomputer 150 signalisiert, dass sich der Teilnehmer 160 an den Servern 20 und 22 anmelden möchte. Daraufhin erzeugt die zentrale, rechnerbasierte Plattform 10 zwei Transaktionsnummern TAN₁ und TAN₂ und überträgt diese zum Personalcomputer 150. Der Personalcomputer 150 oder die Plattform 10 überträgt die Transaktionsnummer TAN₁ zusammen mit den Identifikationsparametern des Teilnehmers 160 zum Server 20 und die Identifikationsparameter des Teilnehmers 160 zusammen mit der Transaktionsnummer TAN₂ zum Server 22. Auf diese Weise wird Teilnehmer 160 an den Servern 20 und 22 angemeldet. Die beiden Transaktionsnummern TAN₁ und TAN₂ werden optional von den beiden Servern 20 und 22 zurück zur zentralen, rechnerbasierten Plattform 10 übertragen und im Identifikationsparameter-Speicher 70 abgelegt. Auf diese Weise bestätigen die Server 20 und 22 der Plattform, dass der Teilnehmer an den Servern 20 und 22 angemeldet worden ist.

Darüber hinaus werden nunmehr Berechtigungsdaten hinsichtlich des Teilnehmers 160 am Personalcomputer 150 eingegeben und in den Speicher 60 der zentralen, rechnerbasierten Plattform 10 eingeschrieben. Die Berechtigungsdaten entsprechen einer Einverständniserklärung des Teilnehmers 160, dass die Server 20 und 22 lokationsbezogene Dienste und/oder Informationen zum Teilnehmer 160 übertragen dürfen.

Ferner sei angenommen, dass am Personalcomputer 150 geographische Zonen definiert werden, die dem regionalen Versorgungsbereich der Server 20 und 22 entsprechen. Die die geographischen Zonen definierenden Daten werden dann vom Personalcomputer 150 in den Speicher 140 der zentralen, rechnerbasierten Plattform eingeschrieben. Weiterhin werden am Personalcomputer 150 Regeln definiert, die zum Beispiel festlegen, dass, wenn der Teilnehmer 160 in den regionalen Versorgungsbereich des Servers 20 oder in den regionalen Versorgungsbereich des Servers 22 eintritt, eine entsprechende Benachrichtigung an den Server 20 bzw. 22 übermittelt wird. Beispielsweise kann zusätzlich eine zeitabhängige Regel im Speicher 110 abgelegt werden, die bestimmt, dass der Server 20 lediglich zwischen 17 und 24 Uhr lokationsbezogene Dienste an den Teilnehmer 160 übertragen darf, während der Server 22 lediglich Sonntags lokationsbedingte Daten an den Teilnehmer 160 übertragen darf.

Obwohl die nachfolgende Funktionsbeschreibung lediglich anhand des Teilnehmers 160 erläutert wird, kann die zentrale, rechnerbasierte Plattform 10 mehrere angemeldete Teilnehmer und Server gleichzeitig verwalten. Zudem können gleichzeitig mehrere Teilnehmer neu registriert oder gelöscht werden.

Weiterhin sei angenommen, dass die Lokalisierungsdaten des Teilnehmers 160, die seinem aktuellen Aufenthaltsort entsprechen, vom GSM-Mobilfunknetz 30 erfasst und regelmäßig oder zu vorbestimmten Zeitpunkten zum Lokationsdaten-Speicher 80 der zentralen, rechnerbasierten Plattform 10 übertragen werden.

Die Überwachungseinrichtung 90 kann derart ausgebildet sein, dass sie regelmäßig die im Lokationsdaten-Speicher 80 für den Teilnehmer 160 hinterlegten Lokalisierungsdaten mit den im Speicher 140 abgelegten geographischen Zonen vergleicht. Sobald die Überwachungseinrichtung 90 feststellt, dass sich der Teilnehmer 160 in der dem Server 20 oder der dem Server 22 zugeordneten geographischen Zone befindet, überprüft sie die im Regelspeicher 110 abgelegten teilnehmerbezogenen Regeln.

Angenommen sei beispielsweise , dass sich der Teilnehmer 160 soeben in die geographische Zone, d.h. in den dem Server 20 zugeordneten Versorgungsbereich eingetreten ist. Daraufhin prüft die Überwachungseinrichtung 90 den Inhalt des Regelspeichers 110. Die für den geographischen Bereich des Servers 20 relevanten Regeln besagen, dass der Server 20 bzw. der dazugehörende Diensteanbieter lokationsbezogene Dienste oder Informationen nur zwischen 17.oo und 24.oo Uhr zum Teilnehmer 160 übermitteln darf. Trifft die Regel zu, und liegt im Speicher 60 eine entsprechende Einverständniserklärung hinsichtlich des Teilnehmers 160 für den Server 20 vor, überträgt die Überwachungseinrichtung 90 eine entsprechende Benachrichtigung an den Server 20, der daraufhin lokationsbezogene Dienste oder eine entsprechende Information über das GSM-Mobilfunknetz 30 zum Teilnehmer 160 überträgt. Die Bereitstellung der Dienste und Übermittlung der Informationen vom Server 20 zum Teilnehmer 160 kann mit oder ohne Vermittlung der Plattform 10 erfolgen. Es wird darauf hingewiesen, dass direkte Verbindungen zwischen den Servern 20, 22 und 24 und den Kommunikationssystemen 30, 32, 34 und'36 nicht dargestellt sind.

Gemäß einer besonderen Weiterentwicklung der zentralen, rechnerbasierten Plattform 10 kann'der Zustandsgenerator 100 aus den hinsichtlich des Teilnehmers 160 aufgezeichneten Lokalisierungsdaten teilnehmerbezogene Bewegungsprofile erzeugen. Anzumerken sei, dass hierzu nicht nur aktuelle, sondern auch über mehrere Tage, Wochen oder Monate angesammelte und protokollierte Lokalisierungsdaten herangezogen werden können, um Bewegungsprofile für einen angemeldeten Teilnehmer zu erzeugen. Der Prädiktor 130 ist derart ausgebildet, dass er in Abhängigkeit von den berechneten Bewegungsprofilen des Teilnehmers 160 die mögliche Strecke des Teilnehmers 160 und somit die zukünftigen Aufenthaltsorte und gegebenenfalls sogar den Zeitpunkt des Erreichens eines zukünftigen Aufenthaltsortes berechnen kann. In Verbindung mit der Überwachungseinrichtung 90, die die Einverständniserklärungen des Teilnehmers 160, die geographische Zone sowie die für den Teilnehmer 160 geltenden Regeln kennt, können somit entsprechende Benachrichtigungen zu den Servern 20 oder 22 übertragen, bevor der Teilnehmer 160 in die entsprechende, zuvor definierte geographische Zone eingetreten ist.

Liegen entsprechende Regeln vor, benachrichtigt die Überwachungseinrichtung 90 die Server 20 und 22 auch darüber, dass der Teilnehmer 160 eine geographische Zone wieder verlassen hat, so dass lokationsbasierte Dienste dem Teilnehmer 160 nicht mehr bereitgestellt werden müssen.

Während der Bereitstellung lokationsbezogener Dienste oder Informationen ermittelt die Abbuchungseinrichtung 120 der zentralen, rechnerbasierten Plattform 10 entsprechende Kommunikations- oder Abbuchungsdatensätze, die, beispielsweise über das Internet, zu einer zentralen Abbuchungszentrale übertragen werden können.

Neben der Möglichkeit, dass die Überwachungseinrichtung 90 die Server 20, 22 und 24 darüber unterrichtet, ob und wann der Teilnehmer in eine geographische Zone eintritt, die dem regionalen Versorgungsbereich des Servers 20 oder 22 entspricht, können die Server selbst an der zentralen, rechnerbasierten Plattform 10 die Lokalisierungsdaten bestimmter Teilnehmer, anfordern. Hierzu überträgt beispielsweise der Server 20 einen Identifikationsparameter des Teilnehmers 160, den er während der Anmeldung des Teilnehmers 160 erhalten hat, zur zentralen, rechnerbasierten Plattform 150. Beispielsweise ist die Überwachungseinrichtung 90 dazu ausgebildet, den übertragenen Identifikationsparameter mit den im Speicher 70 hinterlegten Identifikationsparametern zu vergleichen. Ergibt der Vergleich, dass der nachgefragte Teilnehmer 160 an der zentralen, rechnerbasierten Plattform angemeldet ist, wird geprüft, ob entsprechende Berechtigungsdaten im Speicher 60 hinsichtlich des Servers 20 abgelegt sind. Hat der Teilnehmer 160 dem Server 20 eine entsprechende Berechtigung eingeräumt, lokationsbasierte Dienste anzubieten, überträgt die zentrale, rechnerbasierte Plattform 150 die aktuellen Lokalisierungsdaten zum Server 20. Der Server 20 überprüft dann selbständig, ob sich der Teilnehmer 160 innerhalb seines regionalen Versorgungsbereiches befindet. Wenn ja, stellt er entsprechende lokationsbasierte Dienste bereit, andernfalls nicht.

Denkbar ist ferner, dass, selbst wenn der Server 20 die Übertragung teilnehmerbezogener Lokalisierungsdaten anfordert, die Überwachungseinrichtung 90 Lokalisierungsdaten des Teilnehmers 160 zum berechtigten Server 20 erst dann überträgt, wenn sich der Teilnehmer 160 in der vorab definierten geographischen Zone, deren Daten im Speicher 140 abgelegt sind, befindet und die im Speicher 110 abgelegten Regeln erfüllt sind.

## Patentansprüche

1. Verfahren zum Bereitstellen von Diensten verschiedener Diensteanbieter wenigstens einem Teilnehmer (160) in Abhängigkeit des Aufenthaltsortes des wenigstens einen Teilnehmers, nach dem
mehrere Teilnehmer, die verschiedenen Kommunikationssystemen (30, 32, 34, 36) angehören können, an einer zentralen Einrichtung (10) angemeldet werden;
verschiedene Diensteanbieter der zentralen Einrichtung (10) zugeordnet werden;
Berechtigungsdaten wenigstens eines Teilnehmers in der zentralen Einrichtung gespeichert werden, die den oder die Diensteanbieter berechtigen, einen oder mehrere Dienste dem wenigstens einen Teilnehmer bereitzustellen;
Lokalisierungsdaten der angemeldeten Teilnehmer zur zentralen Einrichtung (10) übertragen und dort gespeichert werden, wobei in Abhängigkeit von den teilnehmerbasierten Lokalisierungsdaten die berechtigten Diensteanbieter Dienste den jeweiligen Teilnehmern (160)bereitstellen.

2. Verfahren nach Anspruch 1,
**dadurch gekennzeichnet, dass**
die teilnehmerbasierten Lokalisierungsdaten vom jeweiligen Teilnehmer (160) und/oder von den Kommunikationssystemen (30, 32, 34, 36) zur zentralen Einrichtung (10) übertragen werden.

3. Verfahren nach Anspruch 1 oder 2,
**dadurch gekennzeichnet, dass**
die Diensteanbieter teilnehmerbasierte Lokalisierungsdaten von der zentralen Einrichtung anfordern, und dass
die zentrale Einrichtung nur an berechtigte Diensteanbieter teilnehmerbasierte Lokalisierunngsdaten überträgt.

4. Verfahren nach einem der Ansprüche 1 bis 3,
**dadurch gekennzeichnet, dass**
die zentrale Einrichtung in Abhängigkeit von den Berechtigungsdaten, den teilnehmerbasierten Lokalisierungsdaten und vorbestimmten Regeln einen oder mehrere der berechtigten Diensteanbieter über den Zustand des jeweiligen Teilnehmers informiert.

5. Verfahren nach einem der Ansprüche 1 bis 4,
**dadurch gekennzeichnet, dass**
die teilnehmerbezogenen Berechtigungsdaten zeitbasierte Informationen enthalten.

6. Verfahren nach einem der Ansprüche 1 bis 6,
**dadurch gekennzeichnet, dass**
beim Anmelden der Teilnehmer an der zentralen Einrichtung teilnehmerbezogene Identifikationsparameter gespeichert werden.

7. Verfahren nach einem der Ansprüche 1 bis 6,
**dadurch gekennzeichnet, dass**
die Teilnehmer mobile Teilnehmer umfassen, und dass
die Lokalisierungsdaten der angemeldeten Teilnehmer aktualisiert werden.

8. Verfahren nach Anspruch 7,
**dadurch gekennzeichnet, dass**
aus den gespeicherten Lokalisierungsdaten mobiler Teilnehmer individuelle Bewegungsprofile berechnet werden.

9. Verfahren nach Anspruch 8,
**dadurch gekennzeichnet, dass**
aus den individuellen Bewegungsprofilen der zukünftige Aufenthaltsort der jeweiligen mobilen Teilnehmer berechnet wird.

10. Verfahren nach einem der Ansprüche 1 bis 10,
**dadurch gekennzeichnet, dass**
in der zentralen Einrichtung für jeden angemeldeten Teilnehmer abrechnungsrelevante Daten gesammelt werden.

11. Verfahren nach einem der Ansprüche 1 bis 10,
**dadurch gekennzeichnet, dass**
die Kommunikationssysteme drahtlose und/oder drahtgebundene Kommunikationsnetze, die auf unterschiedlichen Übertragungstechnologien basieren, enthalten.

12. Zentrale, rechnerbasierte Plattform (10), insbesondere zur Durchführung des Verfahrens nach einem der Ansprüche 1 bis 11, mit
ersten Schnittstellen (40, 42, 44) zur Kommunikation mit Servern (20, 22, 24) verschiedener Diensteanbieter, zweiten Schnittstellen (50, 52, 54, 56) zur Kommunikation mit Kommunikationssystemen (30, 32, 34, 36) und/oder mit den Kommunikationssystemen zugeordneten Teilnehmern (160),
einer ersten Speichereinrichtung (70) zum Speichern von Identifikationsparameter angemeldeter Teilnehmer,
einer zweiten Speichereinrichtung (60) zum Speichern von Berechtigungsdaten wenigstens eines angemeldeten Teilnehmers, die den oder die Diensteanbieter berechtigen, einen oder mehrere Dienste dem wenigstens einen Teilnehmer bereitzustellen,
einer dritten Speichereinrichtung (80) zum Speichern von Lokalisierungsdaten angemeldeter Teilnehmer,
eine Einrichtung (90) zum Steuern der Übertragung von Lokalisierungsdaten zu wenigstens einem Server (20, 22, 24) in Abhängigkeit von den gespeicherten Identifikationsparametern und Berechtigungsdaten.

13. Zentrale, rechnerbasierte Plattform nach Anspruch 12, **gekennzeichnet durch**
eine extern ansteuerbare Einrichtung (100) zum Definieren geografischer Zonen, zum Zuordnen der geografischen Zonen einem oder mehreren Servern (20, 22, 24) und zum Definieren von Regeln bezüglich der geografischen Zonen.

14. Zentrale, rechnerbasierte Plattform nach Anspruch 13, **gekennzeichnet durch**
eine Einrichtung (90) zum Erzeugen einer Benachrichtigung für einen oder mehrere Server (20,22, 24) in Abhängigkeit von den täilnehmerbasierten Lokalisierungsdaten und den Regeln.

15. Zentrale, rechnerbasierte Plattform nach Anspruch 12 oder 14, **dadurch gekennzeichnet, dass**
die ersten Schnittstellen (40, 42, 44) standardisierte Schnittstellen, insbesondere Web-Schnittstellen, und die zweiten Schnittstellen (50, 52, 54, 56) herstellerspezifische Schnittstellen sind.

16. Zentrale, rechnerbasierte Plattform nach einem der Ansprüche 12 bis 15, **gekennzeichnet durch**
eine Einrichtung zum Aktualisieren der Lokalisierungsdaten angemeldeter Teilnehmer.

17. Zentrale, rechnerbasierte Plattform nach Anspruch 16, **gekennzeichnet durch**
eine Recheneinrichtung (100) zum Berechnen individueller Bewegungszustände und/oder Bewegungsprofile aus den gespeicherten Lokalisierungsdaten mobiler Teilnehmer, und
eine vierte Speichereinrichtung (105) zum Speichern der. Bewegungsprofile.

18. Zentrale, rechnerbasierte Plattform nach Anspruch 17, **gekennzeichnet durch** eine Prädiktionseinrichtung (130) zum Berechnen der zukünftigen Aufenthaltsorte der jeweiligen mobilen Teilnehmer aus den individuellen Bewegungsprofilen.

19. Zentrale, rechnerbasierte Plattform nach einem der Ansprüche 12 bis 18, **gekennzeichnet durch**
eine Abrechnungseinrichtung (120).
